(19) Europäisches Patentamt
European Patent Office
Office européen des brevets

(11) **EP 3 315 619 A1**

(12) **EUROPEAN PATENT APPLICATION**
published in accordance with Art. 153(4) EPC

(43) Date of publication:
**02.05.2018 Bulletin 2018/18**

(51) Int Cl.:
***C21D 9/40*** *(2006.01)*  ***C21D 1/10*** *(2006.01)*
***F16C 33/64*** *(2006.01)*

(21) Application number: **16814114.1**

(22) Date of filing: **01.06.2016**

(86) International application number:
**PCT/JP2016/066196**

(87) International publication number:
**WO 2016/208343 (29.12.2016 Gazette 2016/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.06.2015 JP 2015127697**

(71) Applicant: **NTN Corporation**
**Osaka-shi, Osaka 550-0003 (JP)**

(72) Inventors:
• **YUKI, Hiroshi**
 **Kuwana-shi**
 **Mie 511-0867 (JP)**
• **OHKI, Chikara**
 **Kuwana-shi**
 **Mie 511-0867 (JP)**
• **SATO, Miyu**
 **Kuwana-shi**
 **Mie 511-0867 (JP)**

(74) Representative: **Bockhorni & Kollegen**
**Elsenheimerstraße 49**
**80687 München (DE)**

(54) **METHOD FOR PRODUCING BEARING PART**

(57)     Provided is a method for manufacturing a bearing component which can achieve characteristics equivalent to or better than those obtained when an atmosphere furnace heat treatment is used. The method comprises preparing a workpiece composed of steel to be a bearing component, and performing a heat treatment to locally heat the workpiece to a heat treatment temperature of 900°C or higher and 1000°C or lower and subsequently cool the workpiece. In the performing the heat treatment, the heat treatment is conditioned to satisfy the following relationship:

$$6.600 \times 10^{-4}X^2 - 1.205X + 5.539 \times 10 < Y,$$

and

$$1.160 \times 10^{-3}X^2 - 2.094X + 9.472 \times 10^2 < Y,$$

where Y (unit: %) represents a carbide area ratio in the workpiece after the step of performing the heat treatment, and X (unit: °C) represents the heat treatment's temperature.

Printed by Jouve, 75001 PARIS (FR)

**(Cont. next page)**

FIG.2

## Description

TECHNICAL FIELD

The present invention relates to a method for manufacturing a bearing component, and more particularly to a method including a heat treatment for manufacturing a bearing component.

BACKGROUND ART

Normally, an atmosphere furnace heat treatment is used for a heat treatment in a process for manufacturing a bearing component. However, it takes time to start up a heat treatment furnace and adjust its atmosphere, and the heat treatment furnace cannot be stopped easily. Furthermore, the atmosphere furnace heat treatment is predicated on mass production, and it is thus not suitable for small-lot production of bearing components.

One heat treatment method capable of solving such a drawback is a heat treatment using induction heating. Induction heating is suitable for small-lot production because it is done with a short heating time and basically processes a bearing component individually (or singly). In addition, when compared with the above-described heat treatment furnace, an induction heating device can be instantly started up and shut down, and in contrast to the above-described heat treatment furnace, there is no need to constantly arrange personnel in order to constantly operate the heat treatment furnace of interest. In view of these advantages, induction heating is widely used for a heat treatment of mechanical parts made of a steel material having a carbon concentration of about 0.5%.

Furthermore, a technique of applying induction heating to whole quenching of a component made of high carbon chromium bearing steel (for example, JIS SUJ 2) which is an example of a material for a bearing component is disclosed for example in Japanese Patent Laying-Open No. 2006-083412. Japanese Patent Laying-Open No. 2006-083412 discloses a technique of control so that a heating temperature and a heating time fall within a predetermined range. However, Japanese Patent Laying-Open No. 2006-083412 does not disclose specific ranges of the heating temperature and the heating time or reasons why such ranges are determined.

CITATION LIST

PATENT DOCUMENT

PTD 1: Japanese Patent Laying-Open No. 2006-083412

SUMMARY OF INVENTION

TECHNICAL PROBLEM

JIS SUJ 2, which is often used as a material for a bearing component, has a carbon concentration of about 1.0%. A bearing component made of SUJ 2 before a heat treatment has its carbon all existing as a carbide. In a conventional atmosphere furnace heat treatment, such a conditions is used that about 60% of the carbon in a bearing component dissolves into a matrix. It is said that performing a heat treatment of such a condition allows a bearing to be maximized in performance.

Even in a case in which a bearing component made of high carbon chromium bearing steel such as JIS SUJ 2 is subjected to a heat treatment by induction heating, it is preferable to perform the heat treatment under the above condition, however, it is extremely difficult to completely imitate the aforementioned atmosphere furnace heat treatment by a heat treatment method that locally performs high-temperature, short-time heating such as induction heating. However, a demand for small-lot production of bearing components is increasing in recent years, and there is a demand for developing a process even for such small-lot production that can ensure a quality equivalent to that obtained through a conventional atmosphere furnace heat treatment.

The present invention has been made to solve the above problem, and an object of the present invention is to provide a method for manufacturing a bearing component in which when a heat treatment method performing local heating such as induction heating is used, characteristics equivalent to or better than those in a case using an atmosphere furnace heat treatment can be achieved.

SOLUTION TO PROBLEM

According to the present disclosure, a method for producing a bearing component comprises: preparing a workpiece composed of steel to be a bearing component; and performing a heat treatment to locally heat the workpiece to a heat treatment temperature of 900°C or higher and 1000°C or lower and subsequently cool the workpiece. In the performing the heat treatment, the heat treatment is conditioned to satisfy the following relationship:

$$6.600 \times 10^{-4}X^2 - 1.205X + 5.539 \times 10^2 < Y,$$

and

$$1.160 \times 10^{-3}X^2 - 2.094X + 9.472 \times 10^2 < Y,$$

where Y (unit: %) represents a carbide area ratio in the workpiece after the step of performing the heat treatment, and X (unit: °C) represents the heat treatment's temperature.

By doing so, when performing a heat treatment by locally heating a workpiece by induction heating or the like, by satisfying the above-mentioned conditions, the quality of the workpiece after the heat treatment can be equivalent to or better than that in a case using an atmosphere furnace heat treatment.

ADVANTAGEOUS EFFECTS OF INVENTION

According to the above, by using a heat treatment method performing local heating, a bearing component can be obtained which has characteristics equivalent to or better than those in a case using an atmosphere furnace heat treatment.

BRIEF DESCRIPTION OF DRAWINGS

FIG. 1 is a flow chart of a method for manufacturing a bearing component according to an embodiment.
FIG. 2 is a graph for illustrating a heat treatment condition in the method for manufacturing the bearing component according to the present embodiment.
FIG. 3 is a graph showing an example of a heat pattern of a heat treatment in the method for manufacturing the bearing component according to the present embodiment.
FIG. 4 is a graph showing another example of the heat pattern of the heat treatment in the method for manufacturing the bearing component according to the present embodiment.

DESCRIPTION OF EMBODIMENTS

Hereinafter reference will be made to the drawings to describe the present invention in embodiments. In the figures, identical or corresponding components are identically denoted and will not be described repeatedly.

<Method for manufacturing a bearing component>

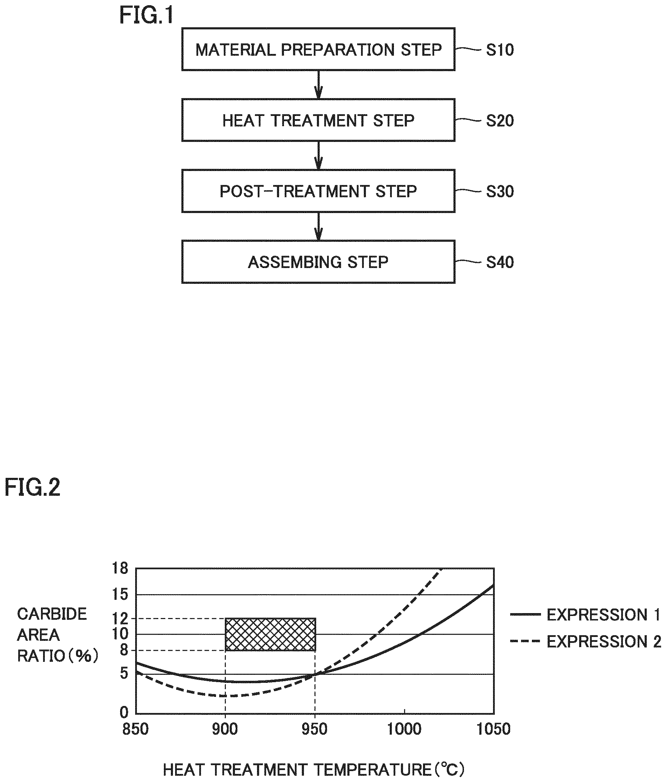

FIG. 1 is a flow chart of a method for manufacturing a bearing by using a method for manufacturing a bearing component according to an embodiment. With reference to FIG. 1, the method for manufacturing the bearing according to the present embodiment will be described.

As shown in Fig. 1, a material preparation step (S10) is initially performed. Specifically, a workpiece of steel to be a bearing component is prepared. As the workpiece, for example, a steel member to be a bearing component such as a bearing's outer ring, inner ring, a rolling element, etc. is prepared. Further, the steel composing the workpiece is, for example, high carbon chromium bearing steel.

Subsequently, a heat treatment step (S20) is performed. Specifically, the workpiece is locally heated and subsequently cooled. A temperature applied to heat a region of the workpiece to be heated (i.e., a heat treatment temperature) can be set for example to 900°C or higher and 1000°C or lower.

In the heat treatment step (S20), the heat treatment is conditioned to satisfy the following relationship:

$$6.600 \times 10^{-4}X^2 - 1.205X + 5.539 \times 10 < Y,$$

and

$$1.160 \times 10^{-3}X^2 - 2.094X + 9.472 \times 10^2 < Y,$$

where Y (unit: %) represents a carbide area ratio in the workpiece after the step of performing the heat treatment, and X (unit: °C) represents the heat treatment's temperature. The relationship between the carbide area ratio and the heat treatment temperature is represented in FIG. 2. In FIG. 2, the horizontal axis represents the heat treatment temperature (unit: °C) and the vertical axis represents the carbide area ratio (unit: %). In the graph of FIG. 2, a solid line represents an expression 1 ($6.600 \times 10^{-4}X^2 - 1.205X + 5.539 \times 10^2 < Y$) and a dotted line represents an expression 2 ($1.160 \times 10^{-3}X^2 - 2.094X + 9.472 \times 10^2 < Y$). The above relationship indicates in FIG. 2 a region upper than the solid line representing expression 1 and the dotted line representing expression 2.

Specifically, in a region where the heat treatment temperature is 900°C or higher and 950°C or lower, a region upper than the solid line (representing expression 1) satisfies the above relationship, and in a region where the heat treatment temperature is 950°C or higher and 1000°C or lower, a region upper than the dotted line (representing expression 2) satisfies the above relationship. Further, as the above relationship, $900°C \leq X \leq 950°C$ and $8\% \leq Y \leq 12\%$ representing a relationship of the carbide area ratio and the heat treatment temperature may be adopted. This relationship is shown in FIG. 2 as a hatched portion.

In the heat treatment step (S20), any method that is a means for locally heating the workpiece can be used and induction heating can be used for example. Furthermore, in the heat treatment step (S20), a heat treatment temperature and a soaking time (a period of time for which the temperature of the workpiece is maintained in a determined temperature range including the heat treatment temperature) are determined so as to satisfy the above relationship.

Note that the heat treatment temperature as referred to herein means a surface temperature of a portion of the workpiece that is being heated. Furthermore, before the workpiece is cooled when the temperature of the workpiece is maintained to fall within the determined temperature range, as described above, the heat treatment temperature may be an average value of the surface temperature of the workpiece for a period of time for which the temperature is maintained to fall within the determined temperature range.(e.g., for a period of time 60 seconds before cooling is started until cooling is started, or a period of time 30 seconds before cooling is started until cooling is started). Alternatively, before the workpiece is cooled when the surface temperature of the workpiece varies to some extent (e.g., the surface temperature gradually increases) the heat treatment temperature may be a highest temperature of the surface temperature varying for a determined period of time before cooling is started (e.g., a period of time 60 seconds before cooling is started until cooling is started, or a period of time 30 seconds before cooling is started until cooling is started) (i.e., a highest heating temperature). The heat treatment temperature can be measured using, for example, a radiation thermometer or the like. Furthermore, the soaking time for example means that period of time after the surface temperature of a portion of the workpiece that is heated attains the heat treatment temperature or higher, for which period of time the surface temperature is maintained within a prescribed temperature range including the heat treatment temperature (e.g., a temperature range of the heat treatment temperature $\pm$ 30°C) (more preferably, a period of time for which the surface temperature is maintained within a prescribed temperature range of not less than the heat treatment temperature). Practically, the soaking time can be a period of time after the surface temperature of the heated portion of the workpiece reaches the heat treatment temperature or higher before cooling the workpiece is started.

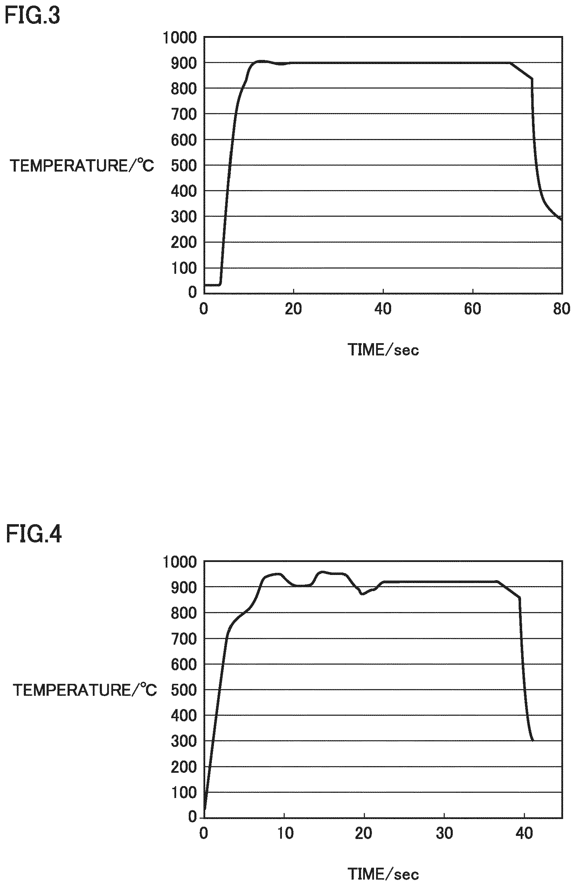

A heat pattern in the heat treatment described above can for example be a heat pattern as shown in FIGS. 3 and 4. In FIGS. 3 and 4, the horizontal axis represents time (unit: seconds), and the vertical axis represents a heat treatment temperature (unit: °C). FIG. 3 shows a case in which the heat treatment temperature is 900°C and the soaking time is about 60 seconds. FIG. 3 shows a case in which the heat treatment temperature during the soaking time substantially has a set value. FIG. 4 shows a case in which the soaking time is about 30 seconds and the heat treatment temperature during the soaking time fluctuates to some extent.

In the heat treatment step (S20) when the workpiece is cooled, the workpiece (e.g., the heated region) is cooled to a temperature equal to or lower than the Ms point. For example, the workpiece may be cooled from the above heat treatment temperature to a temperature of 500°C or lower. Note that the Ms point as referred to herein is a point corresponding to a temperature at which austenitized steel starts martensitization when the steel is cooled. This allows a quenched hardened layer to be formed in the workpiece at the heated region.

In the step of cooling the workpiece, any conventionally well known cooling medium can be used. For example, a liquid such as oil or water may be used as the cooling medium.

Subsequently, a post-treatment step (S30) is performed. Specifically, the step of cleaning the workpiece, the step of machining the workpiece such as the steps of grinding and polishing the workpiece, and the like may be performed. By this post-treatment step (S30), bearing components such as an inner ring, an outer ring, a rolling element and the like are manufactured from the workpiece. The above steps (S10) to (S30) correspond to the method for manufacturing a bearing component according to the present embodiment.

Subsequently, an assembling step (S40) is performed. In this step (S40), a bearing is manufactured by assembling the bearing components obtained by the method for manufacturing a bearing component described above. Thus the method for manufacturing a bearing component is performed.

This allows the workpiece after the heat treatment to have a quality equivalent to or better than that in a case using an atmosphere furnace heat treatment, and can manufacture a bearing component and a bearing having characteristics equivalent to or better than those in a case using the atmosphere furnace heat treatment.

In the method for manufacturing a bearing component described above (i.e., steps (S10) to (S30)), the step of performing a heat treatment (i.e., heat treatment step (S20)) may include heating the workpiece by induction heating as described above. In that case, as induction heating allows a heating device to be easily started up and shut down and is thus suitable for manufacturing bearing components in small lots, bearing components having a quality equivalent to or better than that in a case using an atmosphere furnace heat treatment can be easily manufactured in small lots.

Furthermore, in the method for manufacturing a bearing component as described above, the steel composing the workpiece may be high carbon chromium bearing steel. This ensures that a bearing component composed of high carbon chromium bearing steel has a quality after a heat treatment that is equivalent to or higher than a quality in a case using the atmosphere furnace heat treatment.

In the method for manufacturing a bearing component, the step of performing the heat treatment (S20) may include conditioning the heat treatment to satisfy the following relationship:

$$900°C \leq X \leq 950°C$$

and

$$8\% \leq Y \leq 12\%.$$

This ensures that the workpiece after the heat treatment has a quality equivalent to or higher than a quality in a case using the atmosphere furnace heat treatment.

<Basic concept of derivation of condition of heat treatment>

According to the study by the present inventors, among differences of a heat treatment method performing local heating such as induction heating from an atmosphere furnace heat treatment, there are two differences considered to affect bearing characteristics. The first difference is that induction heating is high-temperature, short-time heating. The second difference is that it is theoretically difficult for induction heating to dissolve carbon in a component in a uniform amount and an amount of carbon dissolved (or an amount of solid solution of carbon) varies in the component.

Such variation in amount of solid solution of carbon in a bearing component is expected to affect the bearing component's secular, dimensional stability, static load capacity, and fracture value. Accordingly, when the upper and lower limits of the amount of solid solution of carbon that allow these characteristics values to be equivalent to or higher than those of a product obtained through the atmosphere furnace heat treatment are investigated, they can be regarded as a range in concentration of solid solution of carbon tolerable in the bearing component. Furthermore, as the heat treatment temperature also affects the above characteristics, the heat treatment temperature's tolerable range is determined by investigating a range of the heat treatment temperature allowing these characteristics values to be equivalent to or higher than those of a product obtained through the atmosphere furnace heat treatment. By using the range of the amount of solid solution of carbon and the range of the heating temperature as described above, it can be determined that a bearing component has a quality equivalent to or higher than that of a product through the atmosphere furnace heat treatment when the entire bearing component falls within the ranges.

Accordingly, how the amount of solid solution of carbon and the heat treatment temperature affect bearing characteristics was investigated and a condition allowing a quality equivalent to that of a product obtained through an atmosphere furnace heat treatment was obtained through the following test:

Note that it is difficult to directly measure an amount of solid solution of carbon. Accordingly, a carbide area ratio in the workpiece (or bearing component) after the heat treatment was used as an alternative index. An approximate amount of solid solution of carbon can be calculated from the carbide area ratio.

<Sample used for deriving a heat treatment condition>

(1) Sample

The test was conducted using a sample of a material having chemical components as shown in a table below:

**Table 1**

| C | Si | Mn | P | S | Ni | Cr | Mo | Cu | Al | O2 |
|---|----|----|---|---|----|----|----|----|----|----|
| 0.98 | 0.27 | 0.42 | 0.011 | 0.007 | 0.06 | 1.47 | 0.03 | 0.08 | 0.035 | 5ppm |

Assuming that the material of the chemical components as above has any carbide all composed of $Fe_3C$, when a carbide area ratio before the heat treatment is calculated from the above carbon concentration, the carbide area ratio will be 15.1%.

(2) Heat treatment method

For the material used in the following test, test levels for the carbide area ratio were set to 4%, 8% and 12%, and test levels for the heating temperature were set to 900°C, 950°C, and 1000°C. Note that heat treatment periods of time (or soaking periods of time) at each heating temperature to allow the above material to have carbide area ratios of 4%, 8% and 12% are as shown in Table 2 below.

Table 2

| heating temperature [°C] | carbide area ratio | | |
|---|---|---|---|
| | 4% | 8% | 12% |
| 900 | 316 s | 57.5 s | 11 s |
| 950 | 65 s | 14.5 s | 3.0 s |
| 1000 | 10.3 s | 4.0 s | 0.7 s |

Table 2 indicates a heat treatment time (unit: seconds) necessary for obtaining a prescribed carbide area ratio when each heating temperature is adopted. For example, Table 2 indicates that when the heating temperature is 900°C, a heat treatment time of 316 seconds is required to obtain a carbide area ratio of 4%.

In order to achieve the above carbide area ratios in the sample used in the test, the following heat treatment was performed. Specifically, as the sample, a steel ring composed of JIS SUJ 2 sized to have an outer diameter of 60.3 mm, an inner diameter of 53.7 mm and an axial width of 15.3 mm was induction-heated with a single-turn coil. The coil is connected to a power source (for supplying electric power to the coil) having a power which is controlled by feeding back the measured temperature of a surface of the ring (a surface of a portion thereof induction-heated by the coil) to thus increase the temperature of the surface of the ring to a prescribed temperature (specifically, 900°C, 950°C, or 1000°C). Note that a period of time from when the heat treatment starts to when the ring's surface attains the above prescribed temperature is, for example, about 5 seconds.

After the ring's surface attains the prescribed temperature, the power supplied to the coil is controlled so that the ring is held at the prescribed temperature for a specific period of time (i.e., the heat treatment time) (or undergoes a soaking step). Subsequently, the ring is cooled. This was done by immersing the ring in oil at a temperature of 70°C (i.e., quenching it). A heat pattern for such a heat treatment can for example be the heat pattern shown in FIG. 3.

After the above heat treatment, the ring was tempered. The tempering was done under standard conditions, i.e., a tempering temperature of 180°C and a holding time of 2 hours.

<Secular, dimensional Stability Test>

While a bearing is used, it dimensionally varies as retained austenite is decomposed. Dimensional variation impairs the bearing in precision, and accordingly, it is required to be of a prescribed level or smaller.

(1) Sample

After the above-described heat treatment, the sample was polished to prepare a ring-shaped sample sized to have an outer diameter of 60 mm, an inner diameter of 54 mm, and an axial width of 15 mm. As the sample, nine types of samples were prepared in view of combinations of the heating temperatures in the heat treatment described above (i.e., 900°C, 950°C, 1000°C) and the carbide area ratios as indicated in Table 2.

(2) Test and result

The nine types of samples described above underwent a treatment such that they were heated at a temperature of 230°C and held for 2 hours and how they varied in external dimension between before and after the treatment was measured. A result thereof is shown in table 3.

Table 3

| soaking temperature [°C] | carbide area ratio [%] | rate of change in dimension [$\times 10^{-5}$] | assessment |
|---|---|---|---|
| 900 | 4 | 71 | NG |
| | 8 | 36 | OK |
| | 12 | 19 | OK |
| 950 | 4 | 78 | NG |
| | 8 | 47 | OK |
| | 12 | 35 | OK |
| 1000 | 4 | 82 | NG |
| | 8 | 77 | NG |
| | 12 | 59 | OK |

Note that a rate of change in dimension as referred to herein is defined as (an absolute value of $D_1 - D_0$)/$D_0$, where $D_0$ represents the outer diameter of a sample before the treatment and $D_1$ represents the outer diameter of the sample after the treatment. The outer diameter of the sample was measured at the same location before and after the sample was held at high temperature. The measurements of the outer diameters were evaluated in two directions crossing at 90° when viewed from the center of the ring-shaped sample. Furthermore, n = 3 for each level.

In Table 3, a rate of change in dimension of less than $70 \times 10^{-5}$ was regarded as being equivalent to or better than that of a product obtained through the atmosphere furnace heat treatment, and thus accepted (indicated in the column "assessment" as "OK"), whereas a rate of change in dimension of $70 \times 10^{-5}$ or larger was rejected (indicated in the column "assessment" as "NG"). As can be seen from Table 3, a sample which can ensure secular dimensional stability equivalent to or better than that of a product obtained through the atmosphere furnace heat treatment has carbide area ratios of 8% and 12% for heat treatment temperatures of 900°C and 950°C and a carbide area ratio of 12% for a heat treatment temperature of 1000°C.

Further, an approximate function is obtained from the above test data and a condition allowing a rate of change in dimension to be less than $70 \times 10^{-5}$ is obtained, as follows: carbide area ratios of 4.0% or more, 4.8% or more and 8.9% or more for heat treating temperatures of 900°C, 950°C and 1000°C, respectively.

<Static load capacity test>

When a large load acts on a bearing, plastic deformation occurs, and to allow the bearing's rolling elements to roll smoothly, the rolling element's plastic deformation is required to be 1/10000 or less of the diameter of the rolling element.

(1) Sample

A sample having a size of 6 mm in length $\times$ 15 mm in width $\times$ 3 mm in thickness was prepared by polishing and wire-cutting the ring having undergone the heat treatment as described above. The sample had a surface of 6 mm $\times$ 15 mm mirror-polished. Similarly as done for the above-described secular dimensional stability test, nine types of samples were prepared in view of combinations of heating temperatures and carbide area ratios.

For comparison, a sample of a comparative example was also prepared as follows: a sample having the same composition underwent an atmosphere furnace heat treatment as a heat treatment and was subsequently machined to provide a sample of a similar size.

(2) Test and result

A 3/8-inch ceramic ball was pressed against the sample on the mirror-polished surface with a determined test load applied thereto. The surface was plastically deformed and thus had an indentation, and a depth thereof was evaluated. The test load was set to 471 N corresponding to Pmax 4 GPa of Hertz contact. Further, for each level, n = 3. A result of the test is shown in Table 4.

Table 4

| soaking temperature [°C] | carbide area ratio [%] | indentation depth [$\mu$m] | standard deviation [$\mu$m] | assessment |
|---|---|---|---|---|
| 900 | 4 | 0.18 | 0.0154 | NG |
| | 8 | 0.13 | 0.0058 | OK |
| | 12 | 0.12 | 0.0176 | - |
| 950 | 4 | 0.23 | 0.0243 | NG |
| | 8 | 0.17 | 0.0045 | OK |
| | 12 | 0.16 | 0.0111 | OK |
| 1000 | 4 | 0.34 | 0.0510 | NG |
| | 8 | 0.26 | 0.0193 | NG |
| | 12 | 0.23 | 0.0282 | NG |
| atmosphere heat treatment | | 0.19 | 0.0004 | |

In Table 4, the column "indentation depth" indicates an average value of a plurality of indentation depths measured for each sample, and the column "standard deviation" indicates a standard deviation of data of the indentation depths. The column "assessment" indicates, with reference to a significance level of 95%, acceptance (OK) for a sample less easily indented than a sample obtained through the atmosphere furnace heat treatment and failure (NG) for a sample more easily indented than the sample obtained through the atmosphere furnace heat treatment. For a sample that does not meet the above criterion, "-" is indicated in the column "assessment."

From this result, it can be seen that the samples indicated as "OK" or "-" exhibit a static load capacity equivalent to or higher than that of a product obtained through the atmosphere furnace heat treatment. More specifically, samples having carbide area ratios of 8% and 12% for heat treatment temperatures of 900°C and 950°C exhibit a static load capacity equivalent to or higher than that of the product obtained through the atmosphere furnace heat treatment.

Further, an approximate function is obtained from the above test data and in a case with a standard deviation set to 0.015 $\mu$m a range is calculated which can ensure a quality equivalent to or higher than that of the product obtained through the atmosphere furnace heat treatment, as follows: carbide area ratios of 2.2% or more, 4.8% or more and 13.2% or more for heat treating temperatures of 900°C, 950°C and 1000°C, respectively.

<Fracture strength test>

A bearing may be required to have fracture strength, and accordingly, a test was conducted as follows:

(1) Sample

A sample having undergone the above-described heat treatment was polished to prepare a ring-shaped sample sized to have an outer diameter of 60 mm, an inner diameter of 54 mm, and an axial width of 15 mm. As the sample, nine types of samples were prepared in view of combinations of the heating temperatures in the heat treatment described above (i.e., 900°C, 950°C, 1000°C) and the carbide area ratios as indicated in Table 2. Further, for each level, n = 3.

For comparison, a sample of a comparative example was also prepared as follows: a sample having the same composition underwent an atmosphere furnace heat treatment as a heat treatment and subsequently machined to provide a sample of a similar size.

(2) Test and result

Each sample was radially sandwiched and a load was applied thereto at a constant rate, and a load leading to fracture was measured. Furthermore, from the load, fracture stress was calculated. A result thereof is shown in Table 5.

Table 5

| soaking temperature [°C] | carbide area ratio [%] | fracture strength [MPa] | standard deviation [μm] | assessment |
|---|---|---|---|---|
| 900 | 4 | 2270 | 160 | NG |
| 900 | 8 | 2490 | 151 | - |
| 900 | 12 | 2760 | 219 | - |
| 950 | 4 | 2123 | 135 | NG |
| 950 | 8 | 2534 | 182 | - |
| 950 | 12 | 2680 | 272 | - |
| 1000 | 4 | 2022 | 143 | |
| 1000 | 8 | 2221 | 175 | |
| 1000 | 12 | 2373 | 222 | |
| atmosphere furnace heat treatment | | 2608 | 121 | |

In Table 5, the column "assessment" indicates failure (NG) for a sample having, even with the standard deviation considered, a fracture strength smaller than that of a product obtained through the atmosphere furnace heat treatment and indicates "-" for a sample capable of ensuring, with the standard deviation is considered, a fracture strength equivalent to or larger than that of the product obtained through the atmosphere furnace heat treatment.

From this result, it can be seen that any sample with "-" indicated in the column "assessment" can exhibit a fracture strength equivalent to or larger than that of the product obtained through the atmosphere furnace heat treatment. More specifically, samples having carbide area ratios of 8% and 12% for heat treatment temperatures of 900°C and 950°C can exhibit a fracture strength equivalent to or larger than that of the product obtained through the atmosphere furnace heat treatment.

Further, an approximate function is obtained from the above test data and in a case with a standard deviation set to 150 MPa a range is calculated which can ensure a quality equivalent to or higher than that of the product obtained through the atmosphere furnace heat treatment, as follows: carbide area ratios of 4.0% or more, 5.4% or more and 9.3% or more for heat treating temperatures of 900°C, 950°C and 1000°C, respectively.

<Studying heat treatment conditions>

From the above results, it has been found that when a high-temperature short-time heating means such as induction heating is employed to quench high-carbon chromium bearing steel such as JIS SUJ 2, performance equivalent to or higher than that of a product obtained through the atmosphere furnace heat treatment can be ensured in a case with heat treatment temperatures of 900°C and 950°C and carbide area ratios of 8% and 12%. Herein, when looking at each data, any of the test results monotonically increases or decreases with respect to the heat treatment temperature and the carbide area ratio. Accordingly, it is believed that a quality equivalent to or higher than that of the product obtained through the atmosphere furnace heat treatment can also be achieved by a heat treatment condition corresponding to the region surrounded by the four points obtained this time (i.e., the hatched region indicated in FIG. 2).

Thus, a quality equivalent to or higher than that of the product obtained through the atmosphere furnace heat treatment can be ensured in a region with a heat treatment temperature of 900°C or higher and 950°C or lower and a carbide area ratio of 8% or more and 12% or less.

Table 6 shows a range of a carbide area ratio which allows a quality equivalent to or higher than that of the product obtained through the atmosphere furnace heat treatment, as obtained from an approximate function of each test result.

Table 6

| temperature [°C] | carbide area ratio with secular dimensional variation considered [%] | carbide area ratio with static load capacity considered [%] | carbide area ratio with facture strength considered [%] |
|---|---|---|---|
| 900 | >4.0 | >2.2 | >4.0 |

(continued)

| temperature [°C] | carbide area ratio with secular dimensional variation considered [%] | carbide area ratio with static load capacity considered [%] | carbide area ratio with facture strength considered [%] |
|---|---|---|---|
| 950 | >4.8 | >4.8 | >5.4 |
| 1000 | >8.9 | >13.2 | >9.3 |

Regarding a relationship between carbide area ratio range and heat treatment temperature shown in Table 6, an approximate function is obtained as follows:
for secular dimension,

$$6.600 \times 10^{-4}X^2 - 1.205X + 5.539 \times 10^2 < Y \qquad \text{(Conditional expression 1)};$$

for static load capacity,

$$1.160 \times 10^{-3}X^2 - 2.094X + 9.472 \times 10^2 < Y \qquad \text{(Conditional expression 2)};$$

and for fracture test,

$$5.000 \times 10^{-4}X^2 - 8.970 \times 10^{-1}X + 4.063 \times 10^2 < Y \qquad \text{(Conditional expression 3)}.$$

Note that Y represents a carbide area ratio (%) and X represents a heat treatment temperature (°C).
And a range which ensures a quality equivalent to or higher than that of the product obtained through the atmosphere furnace heat treatment is a range with heat treating temperature X of 900°C or higher and 1000°C or lower with carbide area ratio Y satisfying the above conditional expressions 1 to 3.
Herein, in the range with heat treating temperature X of 900°C or higher and 1000°C or lower, X satisfying the conditional expression 1 always satisfies the conditional expression 3. Accordingly, the conditional expression 3 need not be taken into consideration. Accordingly, a range which ensures a quality equivalent to or higher than that of the product obtained through the atmosphere furnace heat treatment is a range with heat treating temperature X of 900°C or higher and 1000°C or lower with carbide area ratio Y satisfying the conditional expressions 1 and 2.
While an embodiment of the present invention has been described as above, the embodiment can also be variously modified. Further, the present invention is not limited in scope to the above-described embodiment. The scope of the present invention is defined by the terms of the claims, and is intended to include any modifications within the meaning and scope equivalent to the terms of the claims.

INDUSTRIAL APPLICABILITY

The present embodiment is advantageously applied to a method for manufacturing a bearing component using induction heating, in particular.

REFERENCE SIGNS LIST

S10: material preparation step, S20: heat treatment step, S30: post-treatment step, S40: assembling step.

Claims

1.   A method for manufacturing a bearing component, comprising:

preparing a workpiece composed of steel to be a bearing component; and
performing a heat treatment to locally heat the workpiece to a heat treatment temperature of 900°C or higher and 1000°C or lower and subsequently cool the workpiece,

in the step of performing the heat treatment, the heat treatment being conditioned to satisfy a following relationship:

$$6.600 \times 10^{-4}X^2 - 1.205X + 5.539 \times 10 < Y,$$

and

$$1.160 \times 10^{-3}X^2 - 2.094X + 9.472 \times 10^2 < Y,$$

where Y (unit: %) represents a carbide area ratio in the workpiece after the step of performing the heat treatment, and X (unit: °C) represents the heat treatment's temperature.

2. The method for manufacturing a bearing component according to claim 1, wherein in the step of performing the heat treatment, the workpiece is heated by induction heating.

3. The method for manufacturing a bearing component according to claim 1 or 2, wherein the steel composing the workpiece is high carbon chromium bearing steel.

4. The method for manufacturing a bearing component according to any one of claims 1 to 3, wherein in the step of performing the heat treatment, the heat treatment is conditioned to satisfy a following relation ship:

$$900°C \leq X \leq 950°C$$

and

$$8\% \leq Y \leq 12\%.$$

FIG.1

| | |
|---|---|
| MATERIAL PREPARATION STEP | S10 |
| HEAT TREATMENT STEP | S20 |
| POST-TREATMENT STEP | S30 |
| ASSEMBING STEP | S40 |

FIG.2

CARBIDE AREA RATIO (%) vs HEAT TREATMENT TEMPERATURE (°C)

EXPRESSION 1
EXPRESSION 2

FIG.3

FIG.4

## INTERNATIONAL SEARCH REPORT

| International application No. |
|---|
| PCT/JP2016/066196 |

**A. CLASSIFICATION OF SUBJECT MATTER**
*C21D9/40*(2006.01)i, *C21D1/10*(2006.01)i, *F16C33/64*(2006.01)i

According to International Patent Classification (IPC) or to both national classification and IPC

**B. FIELDS SEARCHED**

Minimum documentation searched (classification system followed by classification symbols)
C21D9/40, C21D1/10, F16C33/64

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)
JSTPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | Takumi FUJITA, Nobuyuki SUZUKI, "Development of Induction Through-hardening and Induction Tempering Methods with Temperature Control and Microstructural Control in Bearing Steel", NTN TECHNICAL REVIEW, 25 October 2012 (25.10.2012), no.80, pages 23 to 30, particularly, page 26 | 1-4 |
| X | JP 2012-149327 A  (NTN Corp.), | 1-3 |
| A | 09 August 2012 (09.08.2012), claims; paragraphs [0066] to [0067]; fig. 8 & US 2013/0301969 A1 claims; paragraphs [0190] to [0191]; fig. 8 & WO 2012/098988 A1   & EP 2666875 A1 & CN 103314119 A | 4 |

| ☒ | Further documents are listed in the continuation of Box C. | ☐ | See patent family annex. |
|---|---|---|---|

\* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 August 2016 (17.08.16) | 30 August 2016 (30.08.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/066196

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-88607 A  (NTN Corp.),<br>15 May 2014 (15.05.2014),<br>& US 2015/0315669 A1   & WO 2014/069149 A1<br>& EP 2915886 A1        & CN 104903471 A | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083412 A